# EUROPEAN PATENT APPLICATION

(11) **EP 1 059 582 A2**
(43) Date of publication of application: **13.12.2000**
(21) Application number: 00112037.7
(22) Date of filing: 02.06.2000
(51) Int. Cl.: G06F 9/455, G06F 9/46

(54) **Virtual machine system**

(30) Priority: 03.06.1999 JP 15676899
(71) Applicant: MATSUSHITA ELECTRIC INDUSTRIAL CO., LTD., Kadoma-shi, Osaka 571-8501 (JP)
(72) Inventor: Sasaki, Hiroyuki, Yokohama-shi, Kanagawa 224-0041 (JP); Kato, Tatsuya, Yokohama-shi, Kanagawa 223-0001 (JP); Arisawa, Ryukou, Yokohama-shi, Kanagawa 223-0056 (JP); Fuji, Yuichi, Yokohama-shi, Kanagawa 222-0031 (JP)
(74) Representative: Grünecker, Kinkeldey, Stockmair & Schwanhäusser Anwaltssozietät

(57) **Abstract**

In a virtual machine system for controlling a plurality of operating systems, priority means 13 compares the priority elements stored in storage means 12 in the trigger for determining the next operating system to be executed, and selects a higher-priority operating system, and execution determination means 11 executes the operating. At this time, the higher-priority operating system is selected based on the execution state of each operating system, the execution priority of each operating system, the task priority of each executable task in each operating system, the time slice execution time of each operating system, etc., as the priority elements.

## Description

### BACKGROUND OF THE INVENTION

This invention relates to a virtual machine system capable of executing multiple operating systems in a computer system.

In recent years, in a computer system, occasions where multiple operating systems (also OSs) are selectively executed have increased, and various virtual machine systems each having an operating system execution control function have been proposed.

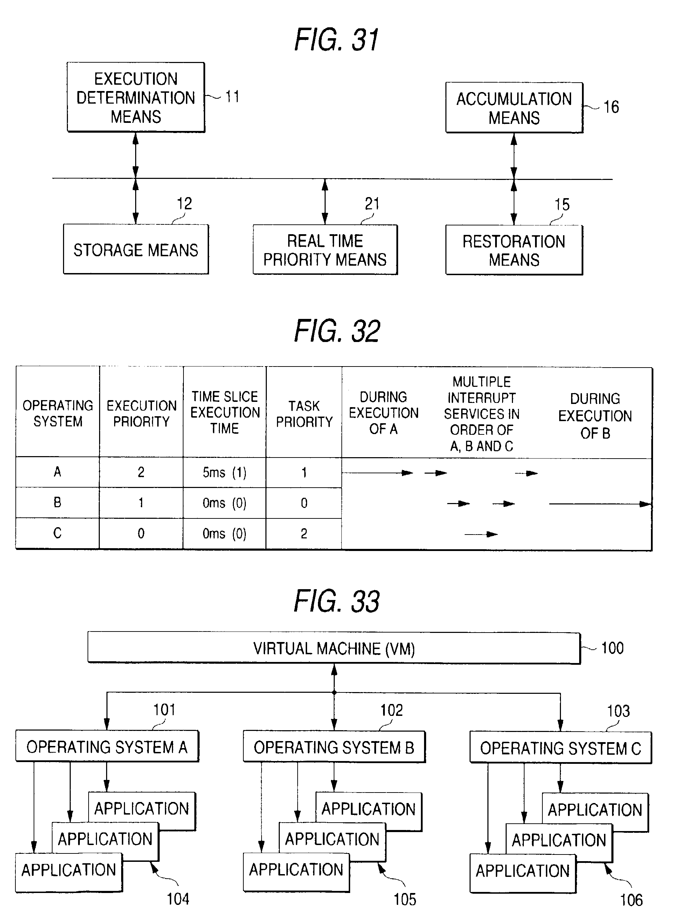

FIG. 33 shows an example of the system configuration of a virtual machine system. Multiple operating systems A 101, B 102, and C 103 different in properties such as real-time property and magnitude of load are executed under a virtual machine (VM) 100 in one or more CPUs (central processing units), and applications 104, 105, and 106 are executed on their respective operating systems. In such a virtual machine system, the operation is executed in a time-sharing manner while the operating systems are changed in sequence; the real-time property and responsivity of OS execution control are important factors.

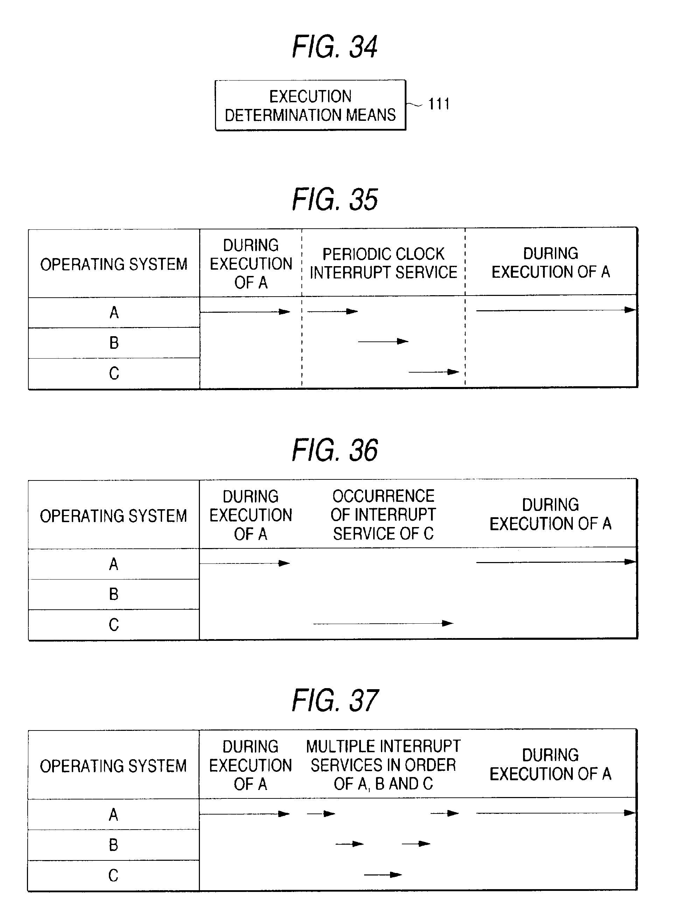

The operating system changing operation in a virtual machine system in a related art will be discussed with reference to FIGS. 34 to 37. Hitherto, as a method of changing multiple operating systems in sequence, execution determination means 111 have performed OS execution control so as to change the operating systems equitably at given time intervals based on time slices, as described in 'OS Series Vol. 11 VM" (written by OKAZAKI Tokio and MATSUSAKI Minoru, Kyoritsu Shuppan, 1989) .

However, in the method in the related art, to operate multiple operating systems different in properties, such as an operating system assigned a high real-time property and an operating system assigned a low real-time property, the operating systems are changed based on equal execution allocation and execution time with time slices ignoring the real-time properties of the operating systems, thus the responsivity of the operating system assigned a high real-time property to processing involving a real-time property is degraded remarkably and the response performance and processing efficiency of the whole computer system are lowered remarkably.

FIG. 35 is a state transition diagram of operating systems before and after clock interrupt service. In the virtual machine system in the related art, the clock interrupt service of each operating system is executed simply in the fixedly determined order in the computer system, for example, in the order of operating systems A, B, and C. If the heights of the real-time properties of the operating systems are A<B<C represented by inequality signs, the response performance of the operating system C requiring a high real-time property to the clock interrupt service is degraded remarkably and the response performance and processing efficiency of the whole computer system are also degraded remarkably.

FIG. 36 is a state transition diagram of operating systems before and after interrupt service. In the virtual machine system in the related art, after interrupt service of the operating system C occurs during execution of the operating system A and is executed, the operating system A is again executed. Thus, the operating system A being executed before the interrupt service is executed until the next operating system change trigger. Generally, when interrupt service occurs, task state change in the operating system is involved with the interrupt as a cause. Thus, after interrupt service, the response performance of the task related to the interrupt is important as continuation processing related to the interrupt. When the heights of the real-time properties of the operating systems are A<B<C represented by inequality signs and an interrupt of the operating system C requiring a high real-time property occurs, execution of the operating A is resumed after interrupt service, the task operation caused by the interrupt of the operating system C is not activated, the task response performance of the operating system C is degraded remarkably, and the response performance and processing efficiency of the whole computer system are also degraded remarkably.

FIG. 37 is a state transition diagram of operating systems before and after multiple interrupt services. In the virtual machine system in the related art, after multiple interrupt services occur in the order of the operating systems A, B, and C during execution of the operating system A and are executed, the operating system A is again executed. Thus, the operating system A being executed before the multiple interrupt services is executed until the next operating system change trigger. When multiple interrupt services occur, task state change in each operating system is also involved with the interrupt as a cause. Thus, after interrupt service, the response performance of the task related to the interrupt is important. When the heights of the real-time properties of the operating systems are A<B<C represented by inequality signs, if execution of the operating A is resumed after the multiple interrupt services, the task operation caused by the interrupt of each of the operating systems B and C is not activated, the task response performance of each of the operating systems B and C is degraded remarkably, and the response performance and processing efficiency of the whole computer system are also degraded remarkably.

As described above, in the virtual machine system in the related art, execution of the operating systems is changed in the fixedly preset order in the computer system. OS execution control is performed independently of the real-time properties of the operating systems, for example, in such a manner that the operating systems are changed equitably at given time intervals based on time slices or that if interrupt service occurs, the operating system being executed at the time is again executed after the interrupt service.

Thus, to execute multiple operating systems different in properties such as real-time property and magnitude of load, the response performance of the operating system requiring a high real-time property to processing is degraded and the response performance and processing efficiency of the whole computer system are also degraded.

### SUMMARY OF THE INVENTION

It is therefore an object of the invention to provide a virtual machine system which enables a higher-priority operating system to be always executed taking precedence over any other operating system when a number of operating systems are executed for making it possible to enhance the response performance of the operating system assigned a high real-time property and improve the processing efficiency of a whole computer system.

To the end, according to the invention as claimed in aspect 1, there is provided a virtual machine system for controlling a plurality of operating systems, comprising storage means for storing an execution priority for each operating system, priority means for comparing the execution priories stored in the storage means in the trigger for determining the next operating system to be executed, and selecting a higher-priority operating system, and execution determination means for executing the operating system selected by the priority means.

In the invention as claimed in aspect 2, the virtual machine system as claimed in aspect 1 further comprises sequencing means for comparing the execution priories stored in the storage means when a clock interrupt occurs and executing clock interrupt service for each operating system in the priority order.

In the invention as claimed in aspect 3, the virtual machine system as claimed in aspect 1 further comprises restoration means for storing the operating system being executed when an interrupt occurs, wherein after the interrupt service corresponding to the interrupt, the execution determination means compares the execution priority of the operating system before the interrupt occurrence with the execution priority of the operating system selected by the priority means and selects and executes the operating system assigned a higher priority.

In the invention as claimed in aspect 4, the virtual machine system as claimed in aspect 3 further comprises accumulation means for sequentially storing the operating systems being executed when multiple interrupts occur in the order in which they occur, wherein when multiple interrupt services corresponding to the multiple interrupts are executed, the execution determination means sequentially executes the operating systems stored in the storage means based on the multiple interrupt occurrence order and after the multiple interrupt services, the execution determination means compares the execution priority of the operating system before the interrupts occurrence, stored in the restoration means with the execution priority of the operating system selected by the priority means and selects and executes the operating system assigned a higher priority.

According to the invention as claimed in aspect 5, there is provided a virtual machine system for controlling a plurality of operating systems, comprising storage means for storing priority elements to determine the operating system to be executed, priority means for comparing the priority elements stored in the storage means in the trigger for determining the next operating system to be executed, and selecting a higher-priority operating system, and execution determination means for executing the operating system selected by the priority means.

In the invention as claimed in aspect 6, in the virtual machine system as claimed in aspect 5, the priority means selects the higher-priority operating system based on at least one of the execution state of each operating system, the execution priority of each operating system, the task priority of each executable task in each operating system, and the time slice execution time of each operating system as the priority elements.

In the invention as claimed in aspect 7, the virtual machine system as claimed in aspect 5 further comprises sequencing means for comparing the execution priories stored in the storage means when a clock interrupt occurs and executing clock interrupt service for each operating system in the priority order, the sequencing means for executing the clock interrupt service for each operating system in the priority order based on at least one of the execution state of each operating system, the execution priority of each operating system, the task priority of each executable task in each operating system, and the time slice execution time of each operating system as the priority elements.

In the invention as claimed in aspect 8, the virtual machine system as claimed in aspect 5 further comprises restoration means for storing the operating system being executed when an interrupt occurs, wherein after the interrupt service corresponding to the interrupt, the execution determination means compares the priority element of the operating system before the interrupt occurrence with the priority element of the operating system selected by the priority means and selects and executes the operating system assigned a higher priority.

In the invention as claimed in aspect 9, in the virtual machine system as claimed in aspect 8, after the interrupt service, the execution determination means selects and executes the operating system assigned a higher priority based on at least one of the execution state of each operating system, the execution priority of each operating system, the task priority of each executable task in each operating system, and the time slice execution time of each operating system as the priority elements.

In the invention as claimed in aspect 10, the virtual machine system as claimed in aspect 8 further comprises accumulation means for sequentially storing the operating systems being executed when multiple interrupts occur in the order in which they occur, wherein when multiple interrupt services corresponding to the multiple interrupts are executed, the execution determination means sequentially executes the operating systems stored in the storage means based on the multiple interrupt occurrence order and after the multiple interrupt services, the execution determination means compares the priority element of the operating system before the interrupts occurrence, stored in the restoration means with the priority element of the operating system selected by the priority means and selects and executes the operating system assigned a higher priority.

In the invention as claimed in aspect 11, in the virtual machine system as claimed in aspect 10, after the multiple interrupt services, the execution determination means selects and executes the operating system assigned a higher priority based on at least one of the execution state of each operating system, the execution priority of each operating system, the task priority of each executable task in each operating system, and the time slice execution time of each operating system as the priority elements.

To control a number of operating systems, the virtual machine system of the invention compares the priority elements stored in the storage means in the trigger for determining the next operating system to be executed and selects and executes a higher-priority operating system. At this time, the higher-priority operating system is selected based on at least one of the execution state of each operating system, the execution priority of each operating system, the task priority of each executable task in each operating system, and the time slice execution time of each operating system as the priority elements. Thus, the priority is determined based on the execution priority, the time slice execution time, etc., and the operating system is selected and executed, whereby it is made possible to always select an operating system assigned a higher real-time property taking precedence over any other operating system; the response performance concerning the higher-priority operating system is enhanced and the response performance of the whole computer system is improved.

When a clock interrupt occurs, the execution priorities, etc., are compared as the priority elements and the clock interrupt service for each operating system is executed in the priority order, whereby the response performance concerning the operating system assigned a higher real-time property and a higher priority is enhanced and the response performance of the whole computer system is more improved.

When an interrupt occurs, after the interrupt service, the priority element of the operating system being executed at the interrupt occurrence time is compared with the priority element of the operating system selected by the priority means and the operating system assigned a higher priority is selected and executed, whereby the response performance concerning the operating system assigned a higher real-time property and a higher priority is enhanced and the response performance of the whole computer system is more improved.

When multiple interrupts occur, while the multiple interrupt services are being executed, the operating systems stored in the storage means are sequentially executed based on the multiple interrupt occurrence order and after the multiple interrupt services, the priority element of the operating system being executed at the occurrence time of the first one of the multiple interrupts, stored in the restoration means is compared with the priority element of the operating system selected by the priority means and the operating system assigned a higher priority is selected and executed, whereby the response performance concerning the operating system assigned a higher real-time property and a higher priority is enhanced and the response performance of the whole computer system is more improved.

### BRIEF DESCRIPTION OF THE DRAWINGS

In the accompanying drawings:
FIG. 1 is a block diagram to show the functional configuration of a virtual machine system according to a first embodiment of the invention;
FIG. 2 is a schematic representation to show a processing list of operating systems stored in storage means according to the first embodiment of the invention;
FIG. 3 is a block diagram to show the functional configuration of a virtual machine system according to a second embodiment of the invention;
FIG. 4 is a state transition diagram of operating systems before and after clock interrupt service in the virtual machine system of the second embodiment of the invention;
FIG. 5 is a block diagram to show the functional configuration of a virtual machine system according to a third embodiment of the invention;
FIG. 6 is a state transition diagram of operating systems before and after interrupt service in the virtual machine system of the third embodiment of the invention;
FIG. 7 is a block diagram to show the functional configuration of a virtual machine system according to a fourth embodiment of the invention;
FIG. 8 is a state transition diagram of operating systems before and after multiple interrupt services in the virtual machine system of the fourth embodiment of the invention;
FIG. 9 is a block diagram to show the functional configuration of a virtual machine system according to a fifth embodiment of the invention;
FIG. 10 is a schematic representation to show a processing list of operating systems stored in storage means according to the fifth embodiment of the invention;
FIG. 11 is a block diagram to show the functional configuration of a virtual machine system according to a sixth embodiment of the invention
FIG. 12 is a state transition diagram of operating systems before and after clock interrupt service in the virtual machine system of the sixth embodiment of the invention;
FIG. 13 is a block diagram to show the functional configuration of a virtual machine system according to a seventh embodiment of the invention;
FIG. 14 is a state transition diagram of operating systems before and after interrupt service in the virtual machine system of the seventh embodiment of the invention;
FIG. 15 is a block diagram to show the functional configuration of a virtual machine system according to an eighth embodiment of the invention;
FIG. 16 is a state transition diagram of operating systems before and after multiple interrupt services in the virtual machine system of the eighth embodiment of the invention;
FIG. 17 is a block diagram to show the functional configuration of a virtual machine system according to a ninth embodiment of the invention;
FIG. 18 is a schematic representation to show a processing list of operating systems stored in storage means according to the ninth embodiment of the invention;
FIG. 19 is a block diagram to show the functional configuration of a virtual machine system according to a tenth embodiment of the invention;
FIG. 20 is a state transition diagram of operating systems before and after clock interrupt service in the virtual machine system of the tenth embodiment of the invention;
FIG. 21 is a block diagram to show the functional configuration of a virtual machine system according to an eleventh embodiment of the invention;
FIG. 22 is a state transition diagram of operating systems before and after interrupt service in the virtual machine system of the eleventh embodiment of the invention;
FIG. 23 is a block diagram to show the functional configuration of a virtual machine system according to a twelfth embodiment of the invention;
FIG. 24 is a state transition diagram of operating systems before and after multiple interrupt services in the virtual machine system of the twelfth embodiment of the invention;
FIG. 25 is a block diagram to show the functional configuration of a virtual machine system according to a thirteenth embodiment of the invention;
FIG. 26 is a schematic representation to show a processing list of operating systems stored in storage means according to the thirteenth embodiment of the invention;
FIG. 27 is a block diagram to show the functional configuration of a virtual machine system according to a fourteenth embodiment of the invention;
FIG. 28 is a state transition diagram of operating systems before and after clock interrupt service in the virtual machine system of the fourteenth embodiment of the invention;
FIG. 29 is a block diagram to show the functional configuration of a virtual machine system according to a fifteenth embodiment of the invention;
FIG. 30 is a state transition diagram of operating systems before and after interrupt service in the virtual machine system of the fifteenth embodiment of the invention;
FIG. 31 is a block diagram to show the functional configuration of a virtual machine system according to a sixteenth embodiment of the invention;
FIG. 32 is a state transition diagram of operating systems before and after multiple interrupt services in the virtual machine system of the sixteenth embodiment of the invention;
FIG. 33 is a block diagram to show an example of the system configuration of a virtual machine system;
FIG. 34 is a block diagram to show execution determination means for performing execution control of operating systems;
FIG. 35 is a state transition diagram of operating systems before and after clock interrupt service in a virtual machine system in a related art;
FIG. 36 is a state transition diagram of operating systems before and after interrupt service in the virtual machine system in the related art; and
FIG. 37 is a state transition diagram of operating systems before and after multiple interrupt services in the virtual machine system in the related art.

### DETAILED DESCRIPTION OF THE PREFERRED EMBODIMENTS

Referring now to the accompanying drawings, there are shown preferred embodiments of the invention.

As shown in FIG. 33, a virtual machine system according to according to embodiments can execute multiple operating systems A 101, B 102, and C 103 different in properties such as real-time property and magnitude of load under a virtual machine 100 in one or more CPUs, and can execute applications 104, 105, and 106 on their respective operating systems. Various operating systems such as real-time OS built in the virtual machine system and UNIX of a time-sharing system (TSS) can be applied as the operating systems. The functional configurations and operation of embodiments of virtual machine systems will be discussed.

### (First embodiment)

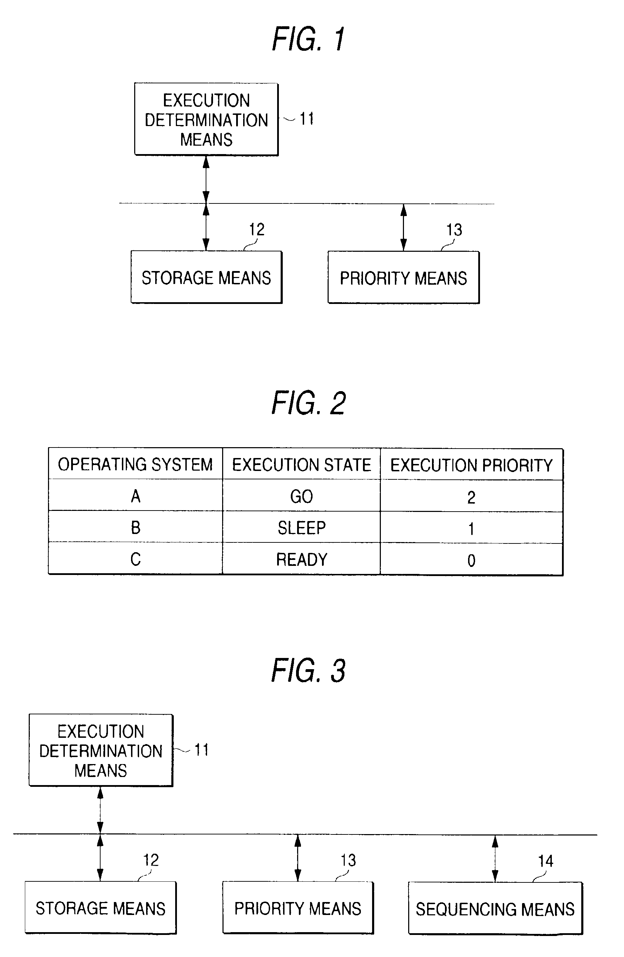

FIG. 1 is a block diagram to show the functional configuration of a virtual machine system according to a first embodiment of the invention and FIG. 2 is a schematic representation to show a processing list of operating systems stored in storage means.

The virtual machine system of the first embodiment comprises storage means 12 for storing the execution state and execution priority of each operating system as priority elements, priority means 13 for comparing the execution priorities of the operating systems as the priority elements stored in the storage means 12 and selecting a higher-priority operating system, and execution determination means 11 for executing the operating system selected by the priority means 13 in the trigger for determining the next operating system to be executed. The execution determination means 11, the storage means 12, and the priority means 13 are implemented as software programs and data that can be executed by a CPU in semiconductor memory, etc., provided in a computer system, and the specific structures and operation principles of the means can be provided using well-known art and will not be discussed here; only the features of the embodiment will be discussed.

Next, the operation of the virtual machine system in the first embodiment is as follows: In the virtual machine system for controlling multiple operating systems, in the trigger for determining the next operating system to be executed, the priority means 13 selects a higher-priority operating system based on the execution state and execution priority of each operating system stored in the storage means 12. The execution determination means 11 executes the selected operating system. The operating system changing trigger, the operating system changing technique, and the like are similar to those in a general virtual machine system.

The storage means 12 stores a processing list of the operating systems as shown in FIG. 2. In the processing list, the execution priority having a smaller value is assumed to be a higher priority and execution state GO means that the operating system is being executed by the CPU at present, READY means that the operating system can be next executed by the CPU, and SLEEP means that the operating system is in a sleep state and cannot be executed by the CPU. The priority means 13 compares the execution priorities of the operating systems placed in the execution state GO or READDY in the processing list and selects a higher-priority operating system. In this case, the executable operating system is A or C and the highest-priority operating system C is selected, then the execution determination means 11 determines execution of the operating system and executes the operating system.

Thus, to operate the operating systems assigned a high real-time property and a low real-time property under the virtual machine, the real-time properties of the operating systems are represented as the execution priorities and an operating system can be selected in accordance with the execution priorities.

As described above, in the embodiment, to control execution of multiple operating systems different in properties, the operating system assigned a higher execution priority is executed taking precedence over any other operating system, whereby the operating system assigned a higher real-time property can always be executed taking precedence over any other operating system and it is made possible to enhance the response performance concerning the operating system assigned a high real-time property requiring instantaneous response processing.

### (Second embodiment)

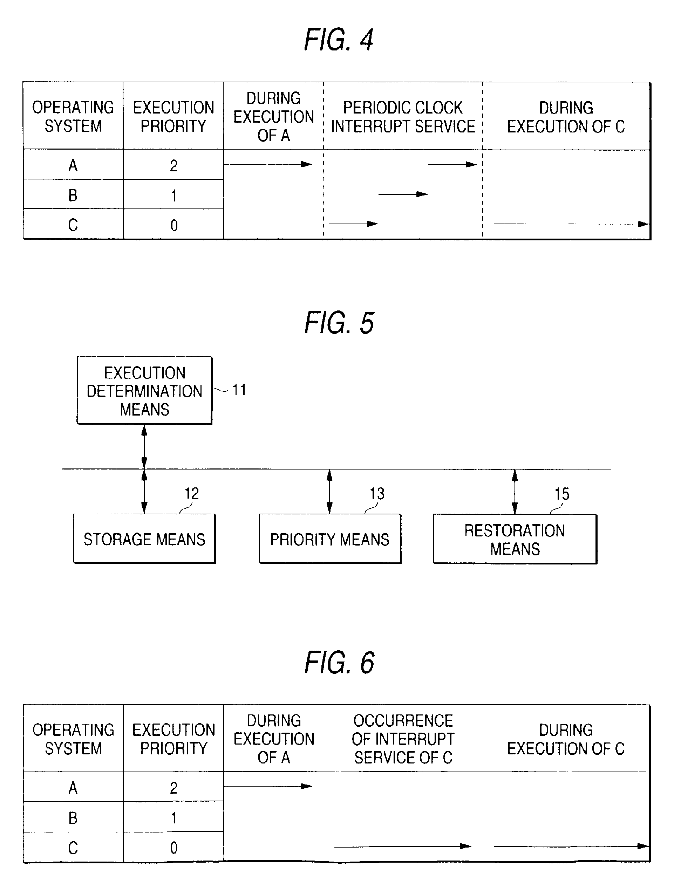

FIG. 3 is a block diagram to show the functional configuration of a virtual machine system according to a second embodiment of the invention and FIG. 4 is a state transition diagram of operating systems before and after clock interrupt service in the virtual machine system of the second embodiment of the invention.

The virtual machine system of the second embodiment comprises sequencing means 14 for comparing the execution priorities of operating systems as the priority elements stored in storage means 12 when clock interrupt service occurs and executing the clock interrupt service for each operating system in the priority order in addition to the components of the virtual machine system of the first embodiment. Other components are similar to those of the virtual machine system of the first embodiment and therefore will not be discussed again.

Next, the operation of the virtual machine system in the second embodiment is as follows: A clock interrupt is entered periodically (for example, every 10 milliseconds) and clock interrupt service is executed in sequence for each operating system. When a clock interrupt occurs, the priority means 13 compares the execution priorities of the operating systems stored in the storage means 12 and selects a higher-priority operating system, and the sequencing means 14 executes the clock interrupt service for each operating system in the priority order based on the selection result of the priority means 13.

In the embodiment, as shown in the state transition diagram of FIG. 4, the clock interrupt service is executed in the execution priority order of the operating systems stored in the storage means 12 rather than simply in the fixedly determined order in the computer system (for example, in the order of operating systems A, B, and C). Here, assuming that the execution priority having a smaller value is a higher priority as in the first embodiment, the sequencing means 14 selectively executes the clock interrupt service in the order of the operating systems C, B, and A, namely, in the order of the operating systems requiring a higher real-time property. After the termination of the clock interrupt service, the operating system C assigned a high real-time property is selected and is executed by execution determination means 11.

Thus, to operate the operating systems assigned a high real-time property and a low real-time property under the virtual machine, when a clock interrupt service occurs, it is made possible to selectively execute the clock interrupt service for each operating system in the order according to the execution priorities.

As described above, in the embodiment, to control execution of multiple operating systems different in properties, the clock interrupt service of the operating system assigned a higher priority is executed taking precedence over the clock interrupt service of any other operating system, whereby the operating system assigned a higher real-time property can always be executed taking precedence over any other operating system at the clock interrupt service time and the response performance of the clock interrupt service concerning the operating system assigned a high real-time property requiring instantaneous response processing can be enhanced, so that it is made possible to more enhance the response performance of the whole computer system.

### (Third embodiment)

FIG. 5 is a block diagram to show the functional configuration of a virtual machine system according to a third embodiment of the invention and FIG. 6 is a state transition diagram of operating systems before and after interrupt service in the virtual machine system of the third embodiment of the invention.

The virtual machine system of the third embodiment comprises restoration means 15 for storing the operating system before the interrupt occurrence in addition to the components of the virtual machine system of the first embodiment. After the interrupt service, execution determination means 11 and priority means 13 compare the execution priority of the operating system being executed at the interrupt occurrence time stored in the restoration means 15 with the execution priority of any executable operating system as priority element and selectively execute the operating system assigned a higher priority. Other components are similar to those of the virtual machine system of the first embodiment and therefore will not be discussed again.

Next, the operation of the virtual machine system in the third embodiment is as follows: When an interrupt occurring at any time, such as key input, occurs, the execution determination means 11 executes the interrupt service. After the interrupt service, the execution determination means 11 compares the execution priority of the operating system before the interrupt occurrence stored in the restoration means 15 with the execution priority of the operating system selected by the priority means 13 and executes the operating system assigned the highest priority at the interrupt service return time.

In the embodiment, as shown in the state transition diagram of FIG. 6, after interrupt service of operating system C occurs during execution of operating systemA and is executed, the execution priority of the operating system before the interrupt occurrence stored in the restoration means 15 is compared with the execution priority of the executable operating system assigned a high priority selected by the priority means 13 and the operating system assigned the highest priority is executed. Here, assuming that the execution priority having a smaller value is a higher priority as in the first embodiment, after the interrupt service, the operating system C assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when an interrupt service occurs, it is made possible to selectively execute the operating system according to the execution priorities after the interrupt service.

As described above, in the embodiment, to control execution of multiple operating systems different in properties, after interrupt service, the operating system assigned a higher priority is executed taking precedence over any other operating system, whereby the operating system assigned a higher real-time property can always be executed taking precedence over any other operating system at the interrupt occurrence time and the response performance concerning the operating system assigned a high real-time property requiring instantaneous response processing, so that it is made possible to more enhance the response performance of the whole computer system.

### (Fourth embodiment)

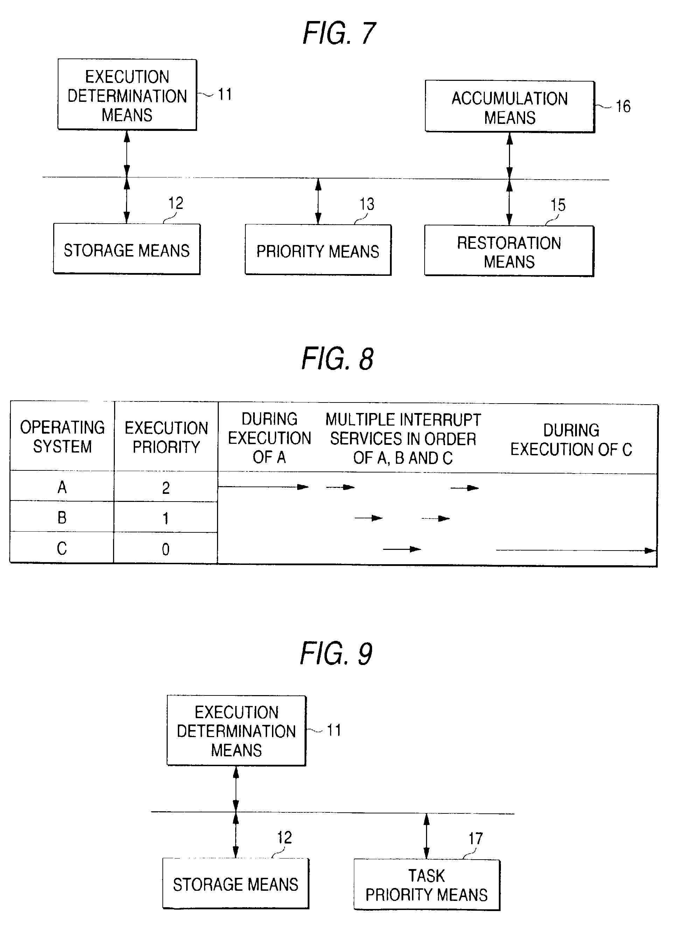

FIG. 7 is a block diagram to show the functional configuration of a virtual machine system according to a fourth embodiment of the invention and FIG. 8 is a state transition diagram of operating systems before and after multiple interrupt services in the virtual machine system of the fourth embodiment of the invention.

The virtual machine system of the fourth embodiment comprises accumulation means 16 for sequentially storing the operating systems being executed when multiple interrupt services occur in the order in which the multiple interrupts occur in addition to the components of the virtual machine system of the third embodiment. After the multiple interrupt services, execution determination means 11 and priority means 13 compare the execution priority of the operating system before the interrupt occurrence stored in restoration means 15 with the execution priority of any executable operating system as priority element and selectively execute the operating system assigned a higher priority. Other components are similar to those of the virtual machine system of the first embodiment and therefore will not be discussed again.

Next, the operation of the virtual machine system in the fourth embodiment is as follows: When multiple interrupts occur, the execution determination means 11 executes the corresponding interrupt service whenever each interrupt occurs. After the termination of the last interrupt service, the execution determination means 11 executes the interrupt services of the operating systems being executed at the multiple interrupt occurrence time stored in the accumulation means 16 in an opposite order to that in which the multiple interrupts occur. That is, during the multiple interrupt services, normal multiple interrupt services are executed without applying priority processing in accordance with the execution priorities. After the multiple interrupt services, the execution determination means 11 compares the execution priority of the operating system before the interrupt occurrence stored in the restoration means 15 with the execution priority of the operating system selected by the priority means 13 and executes the operating system assigned the highest priority at the interrupt service return time.

In the embodiment, as shown in the state transition diagram of FIG. 8, multiple interrupt services occur in the order of operating systems A, B, and C during execution of the operating system A and are executed and after the termination of the interrupt service of the operating system C, the last one of the multiple interrupt services, the interrupt services of the operating systems being executed at the multiple interrupt service occurrence time stored in the accumulation means 16 are executed in the order of B and A. After the interrupt services are executed, the execution priority of the operating system being executed at the occurrence time of the first one of the multiple interrupts stored in the restoration means 15 is compared with the execution priority of the executable operating system assigned a high priority selected by the priority means 13 and the operating system assigned the highest priority is executed. Here, assuming that the execution priority having a smaller value is a higher priority as in the first embodiment, after the multiple interrupt services, the operating system C assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when multiple interrupt services occur, it is made possible to selectively execute the operating system according to the execution priorities after the multiple interrupt services.

As described above, in the embodiment, to control execution of multiple operating systems different in properties, after multiple interrupt services, the operating system assigned a higher priority is executed taking precedence over any other operating system, whereby the operating system assigned a higher real-time property can always be executed taking precedence over any other operating system at the multiple interrupt occurrence time and the response performance concerning the operating system assigned a high real-time property requiring instantaneous response processing, so that it is made possible to more enhance the response performance of the whole computer system.

### (Fifth embodiment)

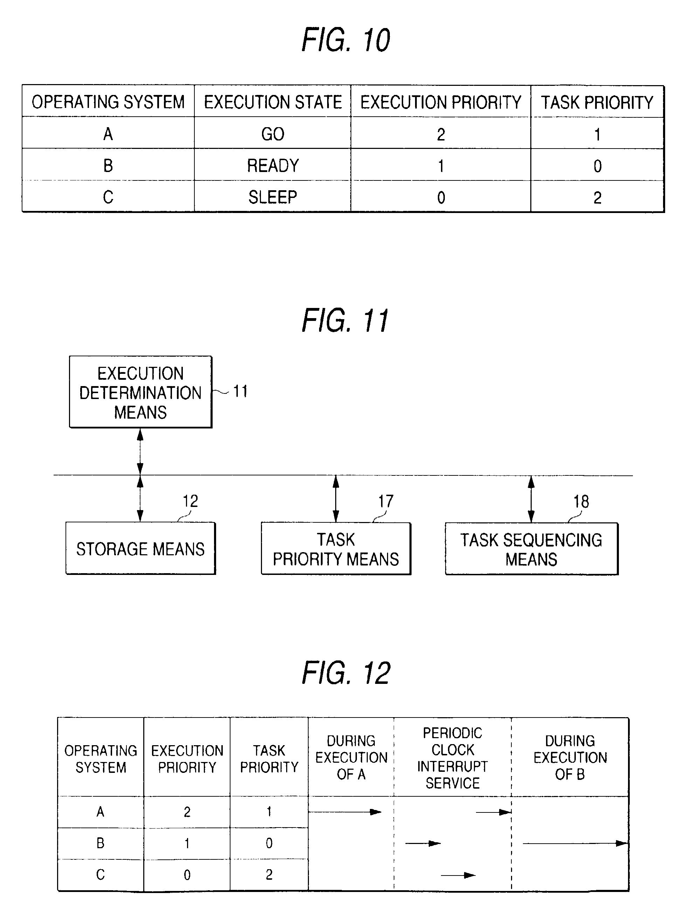

FIG. 9 is a block diagram to show the functional configuration of a virtual machine system according to a fifth embodiment of the invention and FIG. 10 is a schematic representation to show a processing list of operating systems stored in storage means.

Fifth to eighth embodiments are embodiments wherein the operating system to be executed is determined based on priorities provided by adding task priorities to the execution priorities in the first to fourth embodiments described above.

The virtual machine system of the fifth embodiment comprises storage means 12 for storing the execution state and execution priority of each operating system and the task priority of the task being operated or the next task to be operated on each operating system as priority elements, task priority means 17 for comparing the execution priorities and task priorities of the operating systems as the priority elements stored in the storage means 12 and selecting a higher-priority operating system, and execution determination means 11 for executing the operating system selected by the task priority means 17 in the trigger for determining the next operating system to be executed. The execution determination means 11, the storage means 12, and the task priority means 17 are implemented as software programs and data that can be executed by a CPU in semiconductor memory, etc., provided in a computer system, and the specific structures and operation principles of the means are almost similar to those in the related art and will not be discussed here; only the features of the embodiment will be discussed.

Next, the operation of the virtual machine system in the fifth embodiment is as follows: The fifth embodiment is an embodiment in which the task priority of the task being operated or the next task to be operated on each operating system is added to the first embodiment for determining the operating system executed taking precedence over any other operating system. The required real-time property may vary depending on the task type such as key input processing or data storage and transfer processing. In the fifth embodiment, the task priority is added for determining the next operating system to be executed. The determination method of the task being operated or the next task to be operated by each operating system is similar to that in a general virtual machine system.

In the trigger for determining the next operating system to be executed, the task priority means 17 selects a higher-priority operating system based on the execution state, execution priority, and task priority of each operating system stored in the storage means 12. The execution determination means 11 executes the selected operating system.

The storage means 12 stores a processing list of the operating systems as shown in FIG. 10. In the processing list, the execution priority having a smaller value is assumed to be a higher priority and likewise the task priority having a smaller value is assumed to be a higher priority. The sum of the execution priority and the task priority is used as a priority value for determining the operating system to be executed. The task priority means 17 compares the execution priorities of the operating systems placed in the execution state GO or READDY in the processing list and the task priorities of the tasks being operated or the next tasks to be operated by the operating systems and selects a higher-priority operating system. In this case, the executable operating system is A or B and the operating system B having totally the highest priority is selected based on the sum of the execution priority and the task priority, then the execution determination means 11 determines execution of the operating system and executes the operating system.

Thus, to operate the operating systems assigned a high real-time property and a low real-time property under the virtual machine, it is made possible to select an operating system in accordance with the execution priorities concerning the real-time properties of the operating systems and the task priorities concerning the tasks executed in the operating systems.

As described above, in the embodiment, to control execution of multiple operating systems different in properties, the operating system assigned a higher priority considering the execution priority and the task priority is always executed taking precedence over any other operating system, whereby the operating system assigned a higher real-time property requiring instantaneous response processing can be executed taking precedence over any other operating system and it is made possible to enhance the response performance concerning the operating system.

### (Sixth embodiment)

FIG. 11 is a block diagram to show the functional configuration of a virtual machine system according to a sixth embodiment of the invention and FIG. 12 is a state transition diagram of operating systems before and after clock interrupt service in the virtual machine system of the sixth embodiment of the invention.

The virtual machine system of the sixth embodiment comprises task sequencing means 18 for comparing the execution priorities of operating systems and the task priorities of the tasks being operated or the next tasks to be operated by the operating systems as the priority elements stored in storage means 12 when clock interrupt service occurs and executing the clock interrupt service for each operating system in the priority order in addition to the components of the virtual machine system of the fifth embodiment. Other components are similar to those of the virtual machine system of the fifth embodiment and therefore will not be discussed again.

Next, the operation of the virtual machine system in the sixth embodiment is as follows: When a clock interrupt occurs, task priority means 17 compares the execution priorities and task priorities of the operating systems stored in the storage means 12 and selects a higher-priority operating system, and the task sequencing means 18 executes the clock interrupt service for each operating system in the priority order based on the selection result of the task priority means 17.

In the embodiment, as shown in the state transition diagram of FIG. 12, the clock interrupt service is executed in the priority order based on the execution priorities and task priorities of the operating systems stored in the storage means 12 rather than simply in the fixedly determined order in the computer system (for example, in the order of operating systems A, B, and C). Here, assuming that the execution priority having a smaller value is a higher priority and likewise the task priority having a smaller value is a higher priority and that the sum of the execution priority and the task priority is used as a priority value for determining the operating system to be executed as in the fifth embodiment, the task sequencing means 18 selectively executes the clock interrupt service in the order of the operating systems B, C, and A, namely, in the order of the operating systems requiring a higher real-time property. After the termination of the clock interrupt service, the operating system B assigned a high real-time property is selected and is executed by execution determination means 11.

Thus, to operate the operating systems assigned a high real-time property and a low real-time property under the virtual machine, when a clock interrupt service occurs, it is made possible to selectively execute the clock interrupt service for each operating system in the order according to the execution priorities and the task priorities.

As described above, in the embodiment, to control execution of multiple operating systems different in properties, the clock interrupt service of the operating system assigned a higher priority considering the execution priority and the task priority is executed taking precedence over the clock interrupt service of any other operating system, whereby the operating system assigned a higher real-time property requiring instantaneous response processing at the clock interrupt service time can always be executed taking precedence over any other operating system and the response performance of the clock interrupt service concerning the operating system assigned a high real-time property can be enhanced, so that it is made possible to more enhance the response performance of the whole computer system.

### (Seventh embodiment)

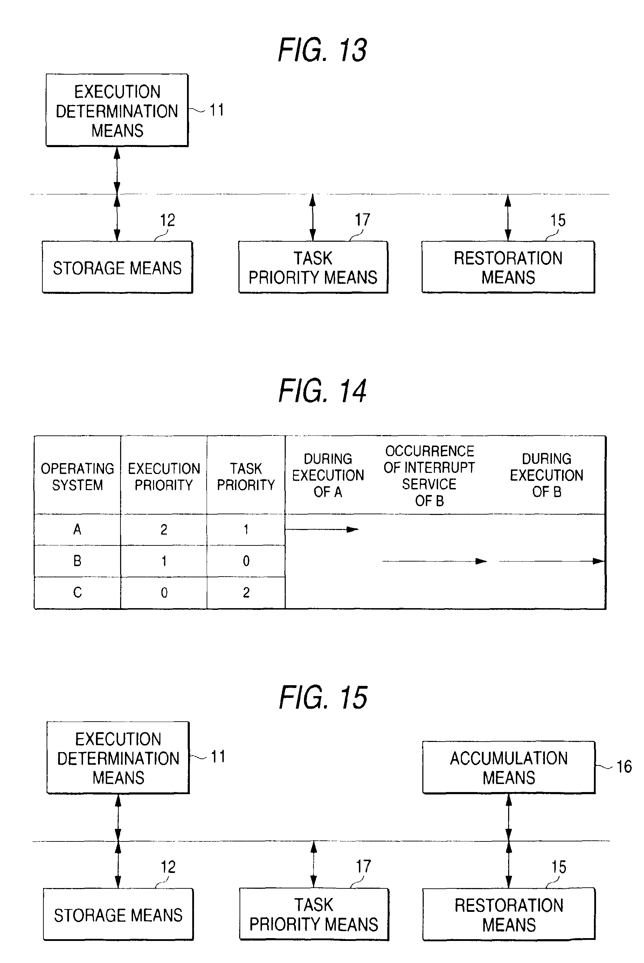

FIG. 13 is a block diagram to show the functional configuration of a virtual machine system according to a seventh embodiment of the invention and FIG. 14 is a state transition diagram of operating systems before and after interrupt service in the virtual machine system of the seventh embodiment of the invention.

The virtual machine system of the seventh embodiment comprises restoration means 15 for storing the operating system being executed when interrupt service occurs in addition to the components of the virtual machine system of the fifth embodiment. After the interrupt service, execution determination means 11 and task priority means 17 compare the execution priority and task priority of the operating system being executed at the interrupt occurrence time stored in the restoration means 15 with those of any executable operating system as priority elements and selectively execute the operating system assigned a higher priority. Other components are similar to those of the virtual machine system of the fifth embodiment and therefore will not be discussed again.

Next, the operation of the virtual machine system in the seventh embodiment is as follows: When an interrupt occurring at any time, such as key input, occurs, the execution determination means 11 executes the interrupt service. After the interrupt service, the execution determination means 11 compares the execution priority and task priority of the operating system being executed at the interrupt occurrence time stored in the restoration means 15 with those of the operating system selected by the task priority means 17 and executes the operating system assigned the highest priority at the interrupt service return time.

In the embodiment, as shown in the state transition diagram of FIG. 14, after interrupt service of operating system B occurs during execution of operating system A and is executed, the execution priority and task priority of the operating system being executed at the interrupt occurrence time stored in the restoration means 15 are compared with those of the executable operating system assigned a high priority selected by the task priority means 17 and the operating system assigned the highest priority is executed. Here, assuming that the execution priority having a smaller value is a higher priority and likewise the task priority having a smaller value is a higher priority and that the sum of the execution priority and the task priority is used as a priority value for determining the operating system to be executed as in the fifth embodiment, after the interrupt service, the operating system B assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when an interrupt service occurs, it is made possible to selectively execute the operating system according to the execution priorities and the task priorities after the interrupt service.

As described above, in the embodiment, to control execution of multiple operating systems different in properties, after interrupt service, the operating system assigned a higher priority considering the execution priority and the task priority is executed taking precedence over any other operating system, whereby the operating system assigned a higher real-time property requiring instantaneous response processing at the interrupt occurrence time can always be executed taking precedence over any other operating system and the response performance concerning the operating system assigned a high real-time property can be enhanced, so that it is made possible to more enhance the response performance of the whole computer system.

### (Eighth embodiment)

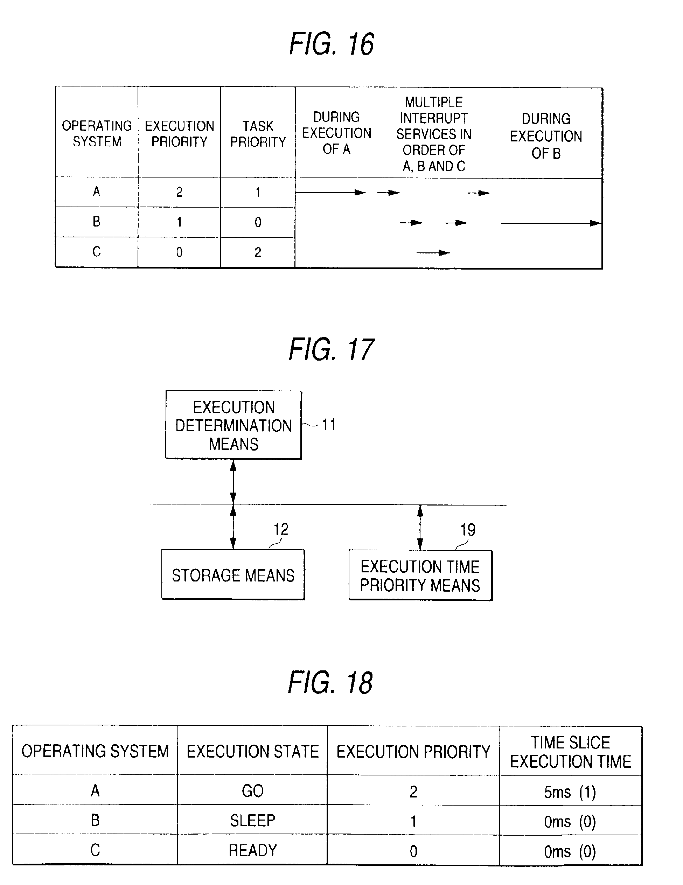

FIG. 15 is a block diagram to show the functional configuration of a virtual machine system according to an eighth embodiment of the invention and FIG. 16 is a state transition diagram of operating systems before and after multiple interrupt services in the virtual machine system of the eighth embodiment of the invention.

The virtual machine system of the eighth embodiment comprises accumulation means 16 for sequentially storing the operating systems being executed when multiple interrupt services occur in the order in which the multiple interrupts occur in addition to the components of the virtual machine system of the seventh embodiment. After the multiple interrupt services, execution determination means 11 and task priority means 17 compare the execution priority and task priority of the operating system being executed at the interrupt occurrence time stored in restoration means 15 with those of any executable operating system as priority elements and selectively execute the operating system assigned a higher priority. Other components are similar to those of the virtual machine system of the fifth embodiment and therefore will not be discussed again.

Next, the operation of the virtual machine system in the eighth embodiment is as follows: When multiple interrupts occur, the execution determination means 11 processes normal multiple interrupts without performing priority processing based on the execution priority and the task priority. After the multiple interrupt services, the execution determination means 11 compares the execution priority and task priority of the operating system being executed at the occurrence time of the first one of the multiple interrupts stored in the restoration means 15 with those of the operating system selected by the task priority means 17 and executes the operating system assigned the highest priority at the interrupt service return time.

In the embodiment, as shown in the state transition diagram of FIG. 16, multiple interrupt services occur in the order of operating systems A, B, and C during execution of the operating system A and are executed and after the termination of the interrupt service of the operating system C, the last one of the multiple interrupt services, the interrupt services of the operating systems being executed at the multiple interrupt service occurrence time stored in the accumulation means 16 are executed in the order of B and A. After the interrupt services are executed, the execution priority and task priority of the operating system being executed at the occurrence time of the first one of the multiple interrupts stored in the restoration means 15 are compared with those of the executable operating system assigned a high priority selected by the task priority means 17 and the operating system assigned the highest priority is executed. Here, assuming that the execution priority having a smaller value is a higher priority and likewise the task priority having a smaller value is a higher priority and that the sum of the execution priority and the task priority is used as a priority value for determining the operating system to be executed as in the fifth embodiment, after the multiple interrupt services, the operating system B assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when multiple interrupt services occur, it is made possible to selectively execute the operating system according to the execution priorities and the task priorities after the multiple interrupt services.

As described above, in the embodiment, to control execution of multiple operating systems different in properties, after multiple interrupt services, the operating system assigned a higher priority considering the execution priority and the task priority is executed taking precedence over any other operating system, whereby the operating system assigned a higher real-time property requiring instantaneous response processing at the multiple interrupt occurrence time can always be executed taking precedence over any other operating system and the response performance concerning the operating system assigned a high real-time property can be enhanced, so that it is made possible to more enhance the response performance of the whole computer system.

### (Ninth embodiment)

FIG. 17 is a block diagram to show the functional configuration of a virtual machine system according to a ninth embodiment of the invention and FIG. 18 is a schematic representation to show a processing list of operating systems stored in storage means.

Ninth to twelfth embodiments are embodiments wherein the operating system to be executed is determined based on priorities provided by adding time slice execution time to the execution priorities in the first to fourth embodiments described above.

The virtual machine system of the ninth embodiment comprises storage means 12 for storing the execution state, execution priority, and time slice execution time of each operating system as priority elements, execution time priority means 19 for comparing the execution priorities and time slice execution times of the operating systems as the priority elements stored in the storage means 12 and selecting a higher-priority operating system, and execution determination means 11 for executing the operating system selected by the execution time priority means 19 in the trigger for determining the next operating system to be executed. The execution determination means 11, the storage means 12, and the execution time priority means 19 are implemented as software programs and data that can be executed by a CPU in semiconductor memory, etc., provided in a computer system, and the specific structures and operation principles of the means are almost similar to those in the related art and will not be discussed here; only the features of the embodiment will be discussed.

Next, the operation of the virtual machine system in the ninth embodiment is as follows: The ninth embodiment is an embodiment in which the time slice execution time in each operating system is added to the first embodiment for determining the operating system executed taking precedence over any other operating system. For the time slice execution time, the virtual machine system sets and holds the execution time elapsed for each operating system, for example, at the operating system change trigger and when the time becomes the upper limit value defined in the computer system (for example, 10 ms) or more, the initial value (usually, value of 0) is set. The time slice execution time calculation method is similar to that in a general virtual machine system.

The virtual machine system changes and executes a plurality of operating systems every variable or fixed time slice. The time slice execution time which is much means a state in which it takes much time in processing execution concerning the operating system and the remaining processing execution time to the upper limit value is less. In contrast, the time slice execution time which is less means a state in which much processing execution time is required until the upper limit value is reached concerning the operating system. In the embodiment, the upper limit value of the time slice execution time is set to, for example, 10 ms, it is considered that the less the time slice execution time, the higher the priority, and the time slice execution time is added to the execution priority for determining the next operating system to be executed.

In the trigger for determining the next operating system to be executed, the execution time priority means 19 selects a higher-priority operating system based on the execution state, execution priority, and time slice execution time of each operating system stored in the storage means 12. The execution determination means 11 executes the selected operating system.

The storage means 12 stores a processing list of the operating systems as shown in FIG. 18. In the processing list, the execution priority having a smaller value is assumed to be a higher priority and likewise the time slice execution time having a smaller value is assumed to be a higher priority. The sum of the execution priority and the time slice execution time is used as a priority value for determining the operating system to be executed. In the priority value, without adding the time slice execution time intact, time slice priorities 0, 1, 2... may be given, for example, in the ascending order of the time slice execution times for using the sum of the time slice priority and the execution priority as the priority. The execution time priority means 19 compares the execution priorities and time slice execution times of the operating systems placed in the execution state GO or READDY in the processing list and selects a higher-priority operating system. In this case, the executable operating system is A or C and the operating system C having totally the highest priority is selected based on the sum of the execution priority and the time slice execution time, then the execution determination means 11 determines execution of the operating system and executes the operating system.

Thus, to operate the operating systems assigned a high real-time property and a low real-time property under the virtual machine, it is made possible to select an operating system in accordance with the execution priorities concerning the real-time properties of the operating systems and the time slice execution times in the operating systems.

As described above, in the embodiment, to control execution of multiple operating systems different in properties, the operating system assigned a higher priority considering the execution priority and the time slice execution time is always executed taking precedence over any other operating system, whereby the operating system assigned a higher real-time property requiring instantaneous response processing can be executed taking precedence over any other operating system and it is made possible to enhance the response performance concerning the operating system.

### (Tenth embodiment)

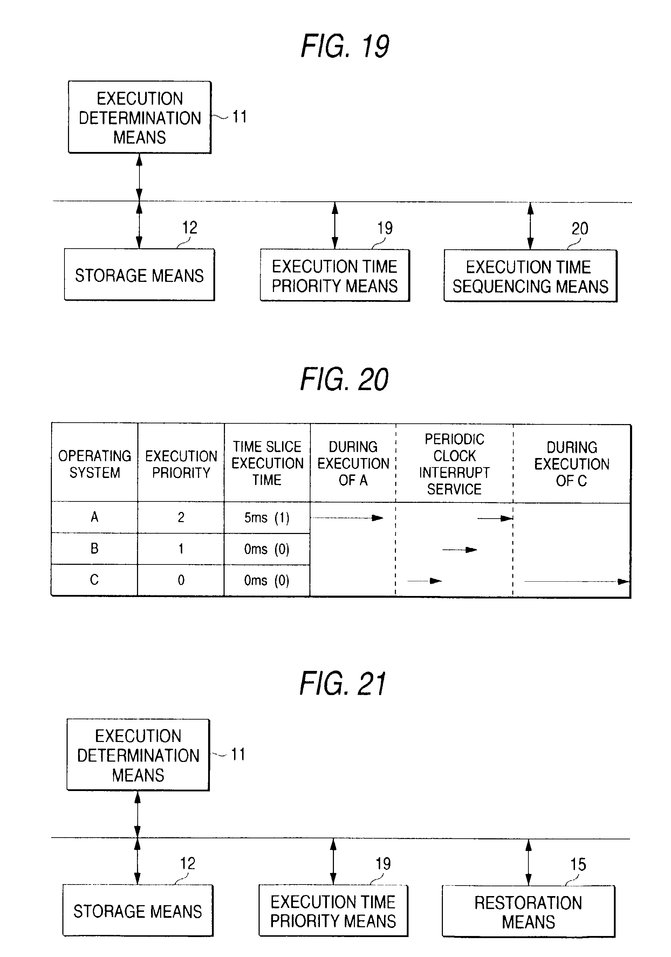

FIG. 19 is a block diagram to show the functional configuration of a virtual machine system according to a tenth embodiment of the invention and FIG. 20 is a state transition diagram of operating systems before and after clock interrupt service in the virtual machine system of the tenth embodiment of the invention.

The virtual machine system of the tenth embodiment comprises execution time sequencing means 20 for comparing the execution priorities and time slice execution times of operating systems stored in storage means 12 as the priority elements when clock interrupt service occurs and executing the clock interrupt service for each operating system in the priority order in addition to the components of the virtual machine system of the ninth embodiment. Other components are similar to those of the virtual machine system of the ninth embodiment and therefore will not be discussed again.

Next, the operation of the virtual machine system in the tenth embodiment is as follows: When a clock interrupt occurs, execution time priority means 19 compares the execution priorities and time slice execution times of the operating systems stored in the storage means 12 and selects a higher-priority operating system, and the execution time sequencing means 20 executes the clock interrupt service for each operating system in the priority order based on the selection result of the execution time priority means 19.

In the embodiment, as shown in the state transition diagram of FIG. 20, the clock interrupt service is executed in the priority order based on the execution priorities and time slice execution times of the operating systems stored in the storage means 12 rather than simply in the fixedly determined order in the computer system (for example, in the order of operating systems A, B, and C). Here, assuming that the execution priority having a smaller value is a higher priority and likewise the time slice execution time having a smaller value is a higher priority and that the sum of the execution priority and the time slice execution time is used as a priority value for determining the operating system to be executed as in the ninth embodiment, the execution time sequencing means 20 selectively executes the clock interrupt service in the order of the operating systems C, B, and A, namely, in the order of the operating systems requiring a higher real-time property. After the termination of the clock interrupt service, the operating system C assigned a high real-time property is selected and is executed by execution determination means 11.

Thus, to operate the operating systems assigned a high real-time property and a low real-time property under the virtual machine, when a clock interrupt service occurs, it is made possible to selectively execute the clock interrupt service for each operating system in the order according to the execution priorities and the time slice execution times.

As described above, in the embodiment, to control execution of multiple operating systems different in properties, the clock interrupt service of the operating system assigned a higher priority considering the execution priority and the time slice execution time is executed taking precedence over the clock interrupt service of any other operating system, whereby the operating system assigned a higher real-time property requiring instantaneous response processing at the clock interrupt service time can always be executed taking precedence over any other operating system and the response performance of the clock interrupt service concerning the operating system assigned a high real-time property can be enhanced, so that it is made possible to more enhance the response performance of the whole computer system.

### (Eleventh embodiment)

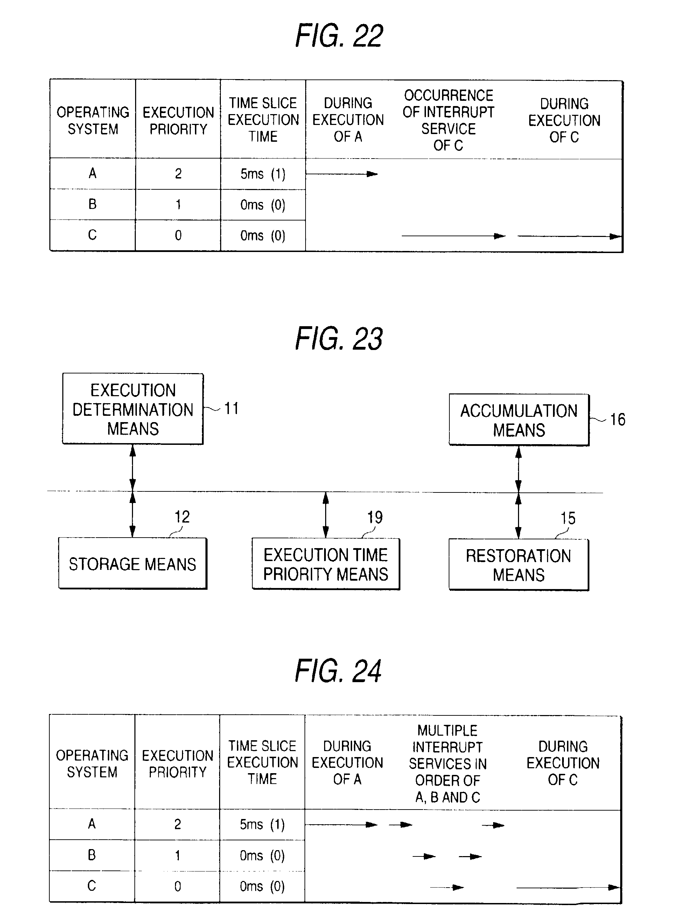

FIG. 21 is a block diagram to show the functional configuration of a virtual machine system according to an eleventh embodiment of the invention and FIG. 22 is a state transition diagram of operating systems before and after interrupt service in the virtual machine system of the eleventh embodiment of the invention.

The virtual machine system of the eleventh embodiment comprises restoration means 15 for storing the operating system being executed when interrupt service occurs in addition to the components of the virtual machine system of the ninth embodiment. After the interrupt service, execution determination means 11 and execution time priority means 19 compare the execution priority and time slice execution time of the operating system being executed at the interrupt occurrence time stored in the restoration means 15 with those of any executable operating system as priority elements and selectively execute the operating system assigned a higher priority. Other components are similar to those of the virtual machine system of the ninth embodiment and therefore will not be discussed again.

Next, the operation of the virtual machine system in the eleventh embodiment is as follows: When an interrupt occurring at any time, such as key input, occurs, the execution determination means 11 executes the interrupt service. After the interrupt service, the execution determination means 11 compares the execution priority and time slice execution time of the operating system being executed at the interrupt occurrence time stored in the restoration means 15 with those of the operating system selected by the execution time priority means 19 and executes the operating system assigned the highest priority at the interrupt service return time.

In the embodiment, as shown in the state transition diagram of FIG. 22, after interrupt service of operating system C occurs during execution of operating systemA and is executed, the execution priority and time slice execution time of the operating system being executed at the interrupt occurrence time stored in the restoration means 15 are compared with those of the executable operating system assigned a high priority selected by the execution time priority means 19 and the operating system assigned the highest priority is executed. Here, assuming that the execution priority having a smaller value is a higher priority and likewise the time slice execution time having a smaller value is a higher priority and that the sum of the execution priority and the time slice execution time is used as a priority value for determining the operating system to be executed as in the ninth embodiment, after the interrupt service, the operating system C assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when an interrupt service occurs, it is made possible to selectively execute the operating system according to the execution priorities and the time slice execution times after the interrupt service.

As described above, in the embodiment, to control execution of multiple operating systems different in properties, after interrupt service, the operating system assigned a higher priority considering the execution priority and the time slice execution time is executed taking precedence over any other operating system, whereby the operating system assigned a higher real-time property requiring instantaneous response processing at the interrupt occurrence time can always be executed taking precedence over any other operating system and the response performance concerning the operating system assigned a high real-time property can be enhanced, so that it is made possible to more enhance the response performance of the whole computer system.

### (Twelfth embodiment)

FIG. 23 is a block diagram to show the functional configuration of a virtual machine system according to a twelfth embodiment of the invention and FIG. 24 is a state transition diagram of operating systems before and after multiple interrupt services in the virtual machine system of the twelfth embodiment of the invention.

The virtual machine system of the twelfth embodiment comprises accumulation means 16 for sequentially storing the operating systems being executed when multiple interrupt services occur in the order in which the multiple interrupts occur in addition to the components of the virtual machine system of the eleventh embodiment. After the multiple interrupt services, execution determination means 11 and execution time priority means 19 compare the execution priority and time slice execution time of the operating system being executed at the interrupt occurrence time stored in restoration means 15 with those of any executable operating system as priority elements and selectively execute the operating system assigned a higher priority. Other components are similar to those of the virtual machine system of the ninth embodiment and therefore will not be discussed again.

Next, the operation of the virtual machine system in the twelfth embodiment is as follows: When multiple interrupts occur, the execution determination means 11 processes normal multiple interrupts without performing priority processing based on the execution priority and the time slice execution time. After the multiple interrupt services, the execution determination means 11 compares the execution priority and time slice execution time of the operating system being executed at the occurrence time of the first one of the multiple interrupts stored in the restoration means 15 with those of the operating system selected by the execution time priority means 19 and executes the operating system assigned the highest priority at the interrupt service return time.

In the embodiment, as shown in the state transition diagram of FIG. 24, multiple interrupt services occur in the order of operating systems A, B, and C during execution of the operating system A and are executed and after the termination of the interrupt service of the operating system C, the last one of the multiple interrupt services, the interrupt services of the operating systems being executed at the multiple interrupt service occurrence time stored in the accumulation means 16 are executed in the order of B and A. After the interrupt services are executed, the execution priority and time slice execution time of the operating system being executed at the occurrence time of the first one of the multiple interrupts stored in the restoration means 15 are compared with those of the executable operating system assigned a high priority selected by the execution time priority means 19 and the operating system assigned the highest priority is executed. Here, assuming that the execution priority having a smaller value is a higher priority and likewise the time slice execution time having a smaller value is a higher priority and that the sum of the execution priority and the time slice execution time is used as a priority value for determining the operating system to be executed as in the ninth embodiment, after the multiple interrupt services, the operating system C assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when multiple interrupt services occur, it is made possible to selectively execute the operating system according to the execution priorities and the time slice execution times after the multiple interrupt services.

As described above, in the embodiment, to control execution of multiple operating systems different in properties, after multiple interrupt services, the operating system assigned a higher priority considering the execution priority and the time slice execution time is executed taking precedence over any other operating system, whereby the operating system assigned a higher real-time property requiring instantaneous response processing at the multiple interrupt occurrence time can always be executed taking precedence over any other operating system and the response performance concerning the operating system assigned a high real-time property can be enhanced, so that it is made possible to more enhance the response performance of the whole computer system.

### (Thirteenth embodiment)

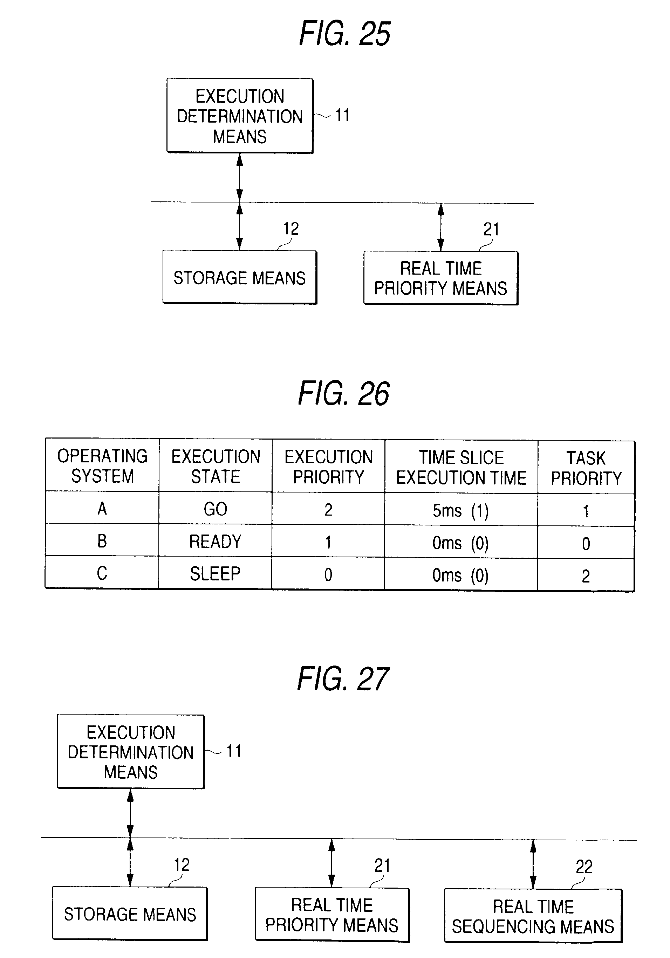

FIG. 25 is a block diagram to show the functional configuration of a virtual machine system according to a thirteenth embodiment of the invention and FIG. 26 is a schematic representation to show a processing list of operating systems stored in storage means.

Thirteenth to sixteenth embodiments are embodiments wherein the operating system to be executed is determined based on priorities provided by adding the task priorities in the fifth to eighth embodiments and the time slice execution times in the ninth to twelfth embodiments to the execution priorities in the first to fourth embodiments described above.

The virtual machine system of the thirteenth embodiment comprises storage means 12 for storing the execution state, execution priority, and time slice execution time of each operating system and the task priority of the task being operated or the next task to be operated on each operating system as priority elements, real time priority means 21 for comparing the execution priorities, time slice execution times, and task priorities of the operating systems as the priority elements stored in the storage means 12 and selecting a higher-priority operating system, and execution determination means 11 for executing the operating system selected by the real time priority means 21 in the trigger for determining the next operating system to be executed. The execution determination means 11, the storage means 12, and the real time priority means 21 are implemented as software programs and data that can be executed by a CPU in semiconductor memory, etc., provided in a computer system, and the specific structures and operation principles of the means are almost similar to those in the related art and will not be discussed here; only the features of the embodiment will be discussed.

Next, the operation of the virtual machine system in the thirteenth embodiment is as follows: The thirteenth embodiment is an embodiment in which the time slice execution time in each operating system and the task priority of the task being operated or the next task to be operated on each operating system are added to the first embodiment for determining the operating system executed taking precedence over any other operating system.

In the trigger for determining the next operating system to be executed, the real time priority means 21 selects a higher-priority operating system based on the execution state, execution priority, time slice execution time, and task priority of each operating system stored in the storage means 12. The execution determination means 11 executes the selected operating system.

The storage means 12 stores a processing list of the operating systems as shown in FIG. 26. In the processing list, the execution priority having a smaller value is assumed to be a higher priority, the time slice execution time having a smaller value is assumed to be a higher priority, and the task priority having a smaller value is assumed to be a higher priority. The sum of the execution priority, the time slice execution time, and the task priority is used as a priority value for determining the operating system to be executed. The real time priority means 21 compares the execution priorities and time slice execution times of the operating systems placed in the execution state GO or READDY in the processing list and the task priorities of the tasks being operated or the next tasks to be operated by the operating systems and selects a higher-priority operating system. In this case, the executable operating system is A or B and the operating system B having totally the highest priority is selected based on the sum of the execution priority, the time slice execution time, and the task priority, then the execution determination means 11 determines execution of the operating system and executes the operating system.

Thus, to operate the operating systems assigned a high real-time property and a low real-time property under the virtual machine, it is made possible to select an operating system in accordance with the execution priorities concerning the real-time properties of the operating systems, the time slice execution times in the operating systems, and the task priorities concerning the tasks executed in the operating systems.

As described above, in the embodiment, to control execution of multiple operating systems different in properties, the operating system assigned a higher priority considering the execution priority, the time slice execution time, and the task priority is executed taking precedence over any other operating system, whereby the operating system assigned a higher real-time property requiring instantaneous response processing can always be executed taking precedence over any other operating system and it is made possible to enhance the response performance concerning the operating system.

### (Fourteenth embodiment)

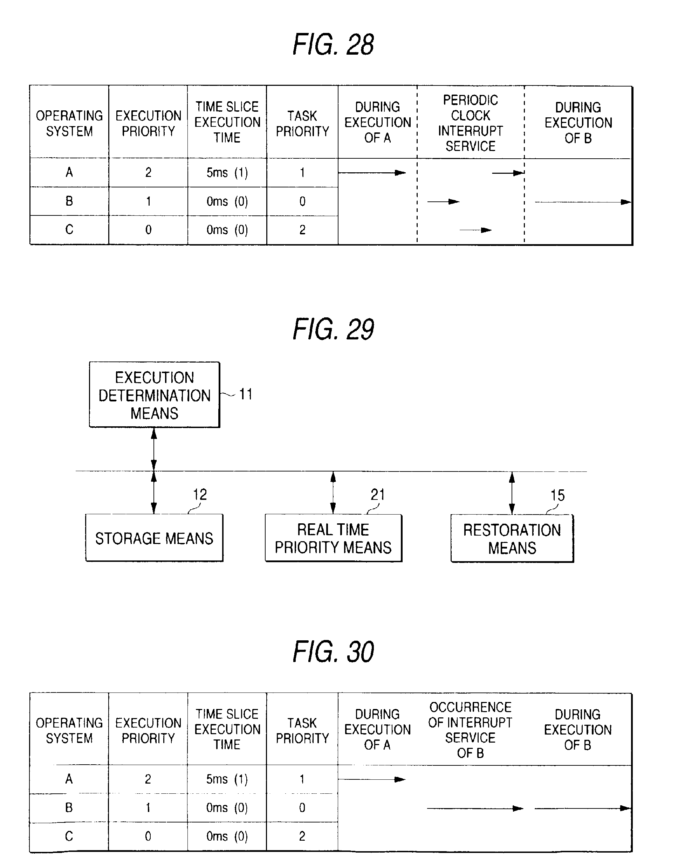

FIG. 27 is a block diagram to show the functional configuration of a virtual machine system according to a fourteenth embodiment of the invention and FIG. 28 is a state transition diagram of operating systems before and after clock interrupt service in the virtual machine system of the fourteenth embodiment of the invention.

The virtual machine system of the fourteenth embodiment comprises real time sequencing means 22 for comparing the execution priorities time slice execution times of operating systems and the task priorities of the tasks being operated or the next tasks to be operated by the operating systems stored in storage means 12 as the priority elements when clock interrupt service occurs and executing the clock interrupt service for each operating system in the priority order in addition to the components of the virtual machine system of the thirteenth embodiment. Other components are similar to those of the virtual machine system of the thirteenth embodiment and therefore will not be discussed again.

Next, the operation of the virtual machine system in the fourteenth embodiment is as follows: When a clock interrupt occurs, real time priority means 21 compares the execution priorities, slice time execution times, and task priorities of the operating systems stored in the storage means 12 and selects a higher-priority operating system, and the real time sequencing means 22 executes the clock interrupt service for each operating system in the priority order based on the selection result of the real time priority means 21.

In the embodiment, as shown in the state transition diagram of FIG. 28, the clock interrupt service is executed in the priority order based on the execution priorities, time slice execution times, and task priorities of the operating systems stored in the storage means 12 rather than simply in the fixedly determined order in the computer system (for example, in the order of operating systems A, B, and C) . Here, assuming that the sum of the execution priority, the time slice execution time, and the task priority is used as a priority value for determining the operating system to be executed and that the smaller the value, the higher the priority as in the thirteenth embodiment, the real time sequencing means 22 selectively executes the clock interrupt service in the order of the operating systems B, C, and A, namely, in the order of the operating systems requiring a higher real-time property. After the termination of the clock interrupt service, the operating system B assigned a high real-time property is selected and is executed by execution determination means 11.

Thus, to operate the operating systems assigned a high real-time property and a low real-time property under the virtual machine, when a clock interrupt service occurs, it is made possible to selectively execute the clock interrupt service for each operating system in the order according to the execution priorities, the time slice execution times, and the task priorities.

As described above, in the embodiment, to control execution of multiple operating systems different in properties, the clock interrupt service of the operating system assigned a higher priority considering the execution priority, the time slice execution time, and the task priority is executed taking precedence over the clock interrupt service of any other operating system, whereby the operating system assigned a higher real-time property requiring instantaneous response processing at the clock interrupt service time can always be executed taking precedence over any other operating system and the response performance of the clock interrupt service concerning the operating system assigned a high real-time property can be furthermore enhanced, so that it is made possible to more enhance the response performance of the whole computer system.

### (Fifteenth embodiment)

FIG. 29 is a block diagram to show the functional configuration of a virtual machine system according to a fifteenth embodiment of the invention and FIG. 30 is a state transition diagram of operating systems before and after interrupt service in the virtual machine system of the fifteenth embodiment of the invention.

The virtual machine system of the fifteenth embodiment comprises restoration means 15 for storing the operating system being executed when interrupt service occurs in addition to the components of the virtual machine system of the thirteenth embodiment. After the interrupt service, execution determination means 11 and real time priority means 21 compare the execution priority, time slice execution time, and task priority of the operating system being executed at the interrupt occurrence time stored in the restoration means 15 with those of any executable operating system as priority elements and selectively execute the operating system assigned a higher priority. Other components are similar to those of the virtual machine system of the thirteenth embodiment and therefore will not be discussed again.

Next, the operation of the virtual machine system in the fifteenth embodiment is as follows: When an interrupt occurring at any time, such as key input, occurs, the execution determination means 11 executes the interrupt service. After the interrupt service, the execution determination means 11 compares the execution priority, time slice execution time, and task priority of the operating system being executed at the interrupt occurrence time stored in the restoration means 15 with those of the operating system selected by the real time priority means 21 and executes the operating system assigned the highest priority at the interrupt service return time.

In the embodiment, as shown in the state transition diagram of FIG. 30, after interrupt service of operating system B occurs during execution of operating system A and is executed, the execution priority, time slice execution time, and task priority of the operating system being executed at the interrupt occurrence time stored in the restoration means 15 are compared with those of the executable operating system assigned a high priority selected by the real time priority means 21 and the operating system assigned the highest priority is executed. Here, assuming that the sum of the execution priority, the time slice execution time, and the task priority is used as a priority value for determining the operating system to be executed and that the smaller the value, the higher the priority as in the thirteenth embodiment, after the interrupt service, the operating system B assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when an interrupt service occurs, it is made possible to selectively execute the operating system according to the execution priorities, the time slice execution times, and the task priorities after the interrupt service.

As described above, in the embodiment, to control execution of multiple operating systems different in properties, after interrupt service, the operating system assigned a higher priority considering the execution priority, the time slice execution time, and the task priority is executed taking precedence over any other operating system, whereby the operating system assigned a higher real-time property requiring instantaneous response processing at the interrupt occurrence time can always be executed taking precedence over any other operating system and the response performance concerning the operating system assigned a high real-time property can be furthermore enhanced, so that it is made possible to still more enhance the response performance of the whole computer system.

### (Sixteenth embodiment)

FIG. 31 is a block diagram to show the functional configuration of a virtual machine system according to a sixteenth embodiment of the invention and FIG. 32 is a state transition diagram of operating systems before and after multiple interrupt services in the virtual machine system of the sixteenth embodiment of the invention.

The virtual machine system of the sixteenth embodiment comprises accumulation means 16 for sequentially storing the operating systems being executed when multiple interrupt services occur in the order in which the multiple interrupts occur in addition to the components of the virtual machine system of the fifteenth embodiment. After the multiple interrupt services, execution determination means 11 and real time priority means 21 compare the execution priority, time slice execution time, and task priority of the operating system being executed at the interrupt occurrence time stored in restoration means 15 with those of any executable operating system as priority elements and selectively execute the operating system assigned a higher priority. Other components are similar to those of the virtual machine system of the thirteenth embodiment and therefore will not be discussed again.

Next, the operation of the virtual machine system in the sixteenth embodiment is as follows: When multiple interrupts occur, the execution determination means 11 processes normal multiple interrupts without performing priority processing based on the execution priority and the task priority. After the multiple interrupt services, the execution determination means 11 compares the execution priority, time slice execution time, and task priority of the operating system being executed at the occurrence time of the first one of the multiple interrupts stored in the restoration means 15 with those of the operating system selected by the real time priority means 21 and executes the operating system assigned the highest priority at the interrupt service return time.

In the embodiment, as shown in the state transition diagram of FIG. 32, multiple interrupt services occur in the order of operating systems A, B, and C during execution of the operating system A and are executed and after the termination of the interrupt service of the operating system C, the last one of the multiple interrupt services, the interrupt services of the operating systems being executed at the multiple interrupt service occurrence time stored in the accumulation means 16 are executed in the order of B and A. After the interrupt services are executed, the execution priority, time slice execution time, and task priority of the operating system being executed at the occurrence time of the first one of the multiple interrupts stored in the restoration means 15 are compared with those of the executable operating system assigned a high priority selected by the real time priority means 21 and the operating system assigned the highest priority is executed. Here, assuming that the sum of the execution priority, the time slice execution time, and the task priority is used as a priority value for determining the operating system to be executed and that the smaller the value, the higher the priority as in the thirteenth embodiment, after the multiple interrupt services, the operating system B assigned a high real-time property is selected and is executed by the execution determination means 11 without resuming the execution of the operating system A being executed at the interrupt occurrence time.

Thus, to operate the operating systems assigned a high real-time property and a low real-time property under the virtual machine, when multiple interrupt services occur, it is made possible to selectively execute the operating system according to the execution priorities, the time slice execution times, and the task priorities after the multiple interrupt services.

As described above, in the embodiment, to control execution of multiple operating systems different in properties, after multiple interrupt services, the operating system assigned a higher priority considering the execution priority, the time slice execution time, and the task priority is executed taking precedence over any other operating system, whereby the operating system assigned a higher real-time property requiring instantaneous response processing at the multiple interrupt occurrence time can always be executed taking precedence over any other operating system and the response performance concerning the operating system assigned a high real-time property can be furthermore enhanced, so that it is made possible to still more enhance the response performance of the whole computer system.

The invention is not limited to the embodiments described above and the following modified embodiments are possible:

The number of operating systems controlled in the virtual machine system does not involve any upper limit; it is not limited to three in the described embodiments and execution of any number of operating systems can be controlled.

The execution priorities of the operating systems are used as fixedly determined values in the described embodiments, but may be able to be changed arbitrarily in response to the virtual machine system, the operating systems, the tasks of the operating systems, etc., while the computer system is operating.

As the execution priority and the task priority, any values that can represent priority levels may be used and are not limited.

The operating system execution state may be represented using any other state than GO, READY, or SLEEP shown in FIG. 2, etc.

To execute calculation and comparison of the priorities for determining the operating system to be executed, in addition to the execution priority and the task priority, any other element such as the sleep time for each operating system or the execution time for each task may be used as a coefficient.

To execute calculation and comparison of the priorities, the sum of the execution priority and the task priority is simply found by calculation in the embodiment. However, a weight coefficient of the task priority or the like may be used for each execution priority, for example, in such a manner that five is added to the task priority each time the execution priority is lowered one level at a time. Alternatively, weighting may be executed between elements for finding a total priority.

For the processing list storing the execution priority, etc., the table structure is used in the described embodiments, but any other structure such as a queue structure or a list structure may be used.

If the clock interrupt service is executed in the priority order as described above, the clock interrupt service for each operating system need not necessarily be performed in one clock interrupt service and may be divided into multiple clock interrupts for processing.

The upper limit value of the time slice execution time is set to 10 ms in the described embodiments; it is not limited and any value may be used in response to the processing performance of the computer system.

One upper limit value of the time slice execution time is fixedly used for one virtual machine system, but the upper limit value of the time slice execution time may be determined and used for each operating system.

In the described embodiments, the time slice execution time having a smaller value is evaluated as a higher priority; in contrast, the time slice execution time having a large value may be evaluated as a higher priority in response to the situation of the computer system. If it is efficient to execute the operating system assigned the less remaining processing execution time to the upper limit value taking precedence over any other operating system, the priority concerning the time slice execution time is thus set, whereby the response performance of the whole computer system can be enhanced.

For calculation of priorities, any other well-known art than the arts in the described embodiments may be applied; no limitation or restriction is placed.

As described throughout the specification, according to the invention, to control a number of operating systems, the priority elements such as the execution priorities stored in the storage means are compared in the trigger for determining the next operating system to be executed, and a higher-priority operating system is selected and executed, whereby it is possible to always execute the operating system assigned a higher real-time property and a higher priority taking precedence over any other operating system; the response performance of the operating system assigned a higher real-time property can be enhanced and the processing efficiency of the whole computer system can be improved.

When a clock interrupt occurs, the priority elements such as the execution priorities are compared and the clock interrupt service for each operating system is executed in the priority order, whereby the response performance concerning the operating system assigned a higher real-time property and a higher priority can be enhanced and the response performance of the whole computer system can be more improved.

When an interrupt occurs, after the interrupt service, the priority element of the operating system being executed at the interrupt occurrence time is compared with the priority element of the operating system selected by the priority means and the operating system assigned a higher priority is selected and executed, whereby the response performance concerning the operating system assigned a higher real-time property and a higher priority can be enhanced and the response performance of the whole computer system can be more improved.

When multiple interrupts occur, while the multiple interrupt services are being executed, the operating systems stored in the storage means are sequentially executed based on the multiple interrupt occurrence order and after the multiple interrupt services, the priority element of the operating system being executed at the occurrence time of the first one of the multiple interrupts, stored in the restoration means is compared with the priority element of the operating system selected by the priority means and the operating system assigned a higher priority is selected and executed, whereby the response performance concerning the operating system assigned a higher real-time property and a higher priority can be enhanced and the response performance of the whole computer system can be more improved.

## Claims

1. A virtual machine system for controlling a plurality of operating systems comprising:
storage means for storing an execution priority for each operating system;
priority means for comparing the execution priories stored in said storage means in a trigger for determining the next operating system to be executed, and selecting a higher-priority operating system; and
execution determination means for executing the operating system selected by said priority means.

2. The virtual machine system as claimed in claim 1, further comprising:
sequencing means for comparing the execution priories stored in said storage means when a clock interrupt occurs, and executing clock interrupt service for each operating system in the priority order.

3. The virtual machine system as claimed in claim 1, further comprising:
restoration means for storing the operating system being executed when an interrupt occurs, wherein
after the interrupt service corresponding to the interrupt, said execution determination means compares the execution priority of the operating system before the interrupt occurrence with the execution priority of the operating system selected by said priority means, and selects, and executes the operating system assigned a higher priority.

4. The virtual machine system as claimed in claim 3, further comprising:
accumulation means for sequentially storing the operating systems being executed when multiple interrupts occur in the order in which they occur, wherein
when multiple interrupt services corresponding to the multiple interrupts are executed, said execution determination means sequentially executes the operating systems stored in said storage means based on the multiple interrupt occurrence order, and
after the multiple interrupt services, said execution determination means compares the execution priority of the operating system before the interrupt occurrence, stored in said restoration means with the execution priority of the operating system selected by said priority means, and selects, and executes the operating system assigned a higher priority.

5. A virtual machine system for controlling a plurality of operating systems comprising:
storage means for storing priority elements to determine the operating system to be executed;
priority means for comparing the priority elements stored in said storage means in a trigger for determining the next operating system to be executed, and selecting a higher-priority operating system; and
execution determination means for executing the operating system selected by said priority means.

6. The virtual machine system as claimed in claim 5, wherein
said priority means selects the higher-priority operating system based on at least one of the execution state of each operating system, the execution priority of each operating system, the task priority of each executable task in each operating system, and the time slice execution time of each operating system as the priority elements.

7. The virtual machine system as claimed in claim 5, further comprising:
sequencing means for comparing the execution priories stored in said storage means when a clock interrupt occurs, and executing clock interrupt service for each operating system in the priority order, wherein
said sequencing means for executing the clock interrupt service for each operating system in the priority order based on at least one of the execution state of each operating system, the execution priority of each operating system, the task priority of each executable task in each operating system, and the time slice execution time of each operating system as the priority elements.

8. The virtual machine system as claimed in claim 5, further comprising:
restoration means for storing the operating system being executed when an interrupt occurs, wherein
after the interrupt service corresponding to the interrupt, said execution determination means compares the priority element of the operating system before the interrupt occurrence with the priority element of the operating system selected by said priority means, and selects, and executes the operating system assigned a higher priority.

9. The virtual machine system as claimed in claim 8, wherein
after the interrupt service, said execution determination means selects, and executes the operating system assigned a higher priority based on at least one of the execution state of each operating system, the execution priority of each operating system, the task priority of each executable task in each operating system, and the time slice execution time of each operating system as the priority elements.

10. The virtual machine system as claimed in claim 8, further comprising:
accumulation means for sequentially storing the operating systems being executed when multiple interrupts occur in the order in which they occur, wherein
when multiple interrupt services corresponding to the multiple interrupts are executed, said execution determination means sequentially executes the operating systems stored in said storage means based on the multiple interrupt occurrence order, and
after the multiple interrupt services, said execution determination means compares the priority element of the operating system before the interrupt occurrence, stored in said restoration means with the priority element of the operating system selected by said priority means, and selects, and executes the operating system assigned a higher priority.

11. The virtual machine system as claimed in claim 10, wherein
after the multiple interrupt services, said execution determination means selects, and executes the operating system assigned a higher priority based on at least one of the execution state of each operating system, the execution priority of each operating system, the task priority of each executable task in each operating system, and the time slice execution time of each operating system as the priority elements.
